(19) Europäisches Patentamt
European Patent Office
Office européen des brevets

(11) **EP 3 911 110 A1**

(12) **EUROPEAN PATENT APPLICATION**

(43) Date of publication:
**17.11.2021 Bulletin 2021/46**

(51) Int Cl.:
**H04W 76/15** *(2018.01)*    **H04W 84/12** *(2009.01)*

(21) Application number: **21172227.7**

(22) Date of filing: **05.05.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.05.2020 US 202063020585 P**
**03.05.2021 US 202117306521**

(71) Applicant: **MediaTek Singapore Pte. Ltd.**
**Singapore 138628 (SG)**

(72) Inventors:
• SEOK, Yongho
San Jose,, 95134 (US)
• LU, Kai Ying
San Jose,, 95134 (US)
• BAJKO, Gabor
San Jose,, 95134 (US)
• YEE, James Chih-Shi
San Jose,, 95134 (US)

(74) Representative: **Hoefer & Partner Patentanwälte mbB**
**Pilgersheimer Straße 20**
**81543 München (DE)**

(54) **STATION IDENTIFIER INDICATION FOR CONSTRAINED IN MULTI-LINK OPERATION IN WIRELESS COMMUNICATIONS**

(57)    A first station, STA, in a non-access point, non-AP, multi-link device, MLD, which has a constraint on simultaneous transmission and reception, TX/RX, on the first link and the second link, receives a Physical Layer Convergence Protocol, PLCP, Protocol Data Unit, PPDU, on a first link or a second link (310). In response to the PPDU meeting a condition, one or more other STAs of a plurality of STAs in the non-AP MLD are refrained from performing an operation (320).

300

RECEIVE A PHYSICAL LAYER CONVERGENCE PROTOCOL (PLCP) PROTOCOL DATA UNIT (PPDU) ON A FIRST LINK OR A SECOND LINK BY A FIRST STATION (STA) IN A NON-ACCESS POINT (NON-AP) MULTI-LINK DEVICE (MLD) WHICH HAS A CONSTRAINT ON SIMULTANEOUS TRANSMISSION AND RECEPTION (TX/RX) ON THE FIRST LINK AND THE SECOND LINK
310

REFRAIN ONE OR MORE OTHER STAs OF A PLURALITY OF STAs IN THE NON-AP MLD FROM PERFORMING AN OPERATION RESPONSIVE TO THE PPDU MEETING A CONDITION
320

FIG. 3

## Description

## CROSS REFERENCE TO RELATED PATENT APPLICATION

The present disclosure is part of a non-provisional patent application claiming the priority benefit of U.S. Provisional Patent Application No. 63/020,585, filed on 6 May 2020, the content of which being incorporated by reference in its entirety.

## TECHNICAL FIELD

The present disclosure is generally related to wireless communications and, more particularly, to station (STA) identifier (ID) indication for constrained multi-link operation in wireless communications.

## BACKGROUND

Unless otherwise indicated herein, approaches described in this section are not prior art to the claims listed below and are not admitted as prior art by inclusion in this section.

For next-generation wireless communications such as those in a wireless local area network (WLAN) according to the Institute of Electrical and Electronics Engineers (IEEE) 802.11 specifications, a STA should access multiple links simultaneously to meet extreme-high-throughput (EHT) requirements of extremely low latency and extremely high throughput. When the STA obtains transmission opportunities (TXOPs) in multiple links, the STA can simultaneously transmit frames on multiple links. Also, while the STA is transmitting frames, the STA can simultaneously receive another frame on different link(s). However, there may be in-device coexistence (IDC) interference when the STA simultaneously transmits and receives frames. When such simultaneous transmission and reception (TX/RX) operation occurs between a 2.4-GHz band and a 5-GHz band, the IDC interference can be negligible. However, the IDC interference caused by simultaneous TX/RX operation between the 5-GHz band and a 6-GHz band may be significantly worse depending on some implementation factors such as radio frequency (RF) filter performance.

## SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to STA ID indication for constrained multi-link operation in wireless communications. Under various proposed schemes in accordance with the present disclosure, the aforementioned issues may be addressed. Methods and apparatuses according to the invention are defined in the independent claims. The dependent claims define preferred embodiments thereof.

In one aspect, a method may involve receiving a Physical Layer Convergence Protocol (PLCP) Protocol Data Unit (PPDU) on a first link or a second link by a first STA in a non-access point (non-AP) multi-link device (MLD) which has a constraint on simultaneous TX/RX on the first link and the second link. The method may also involve refraining one or more other STAs of a plurality of STAs in the non-AP MLD from performing an operation responsive to the PPDU meeting a condition.

In another aspect, a method may involve receiving a PPDU on a first link or a second link by a first access point (AP) in an AP MLD. The method may also involve refraining one or more other APs of a plurality of APs in the AP MLD from scheduling any transmission to a STA responsive to the STA meeting a condition.

In yet another aspect, a method may involve setting a STA ID field in a physical layer (PHY) header of a EHT PPDU for a receiver STA by: (i) setting the STA ID field to a value corresponding to an association identifier (AID) associated with the receiver STA responsive to the receiver STA being a single STA; or (ii) setting the STA ID field to a predetermined value responsive to the receiver STA being one of a plurality of STAs of a MLD. The method may also involve transmitting the EHT PPDU to the receiver STA by an AP in an AP MLD.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5th Generation (5G)/New Radio (NR), Long-Term Evolution (LTE), LTE-Advanced, LTE-Advanced Pro, Internet-of-Things (IoT), Industrial IoT (IIoT) and narrowband IoT (NB-IoT). Thus, the scope of the present disclosure is not limited to the examples described herein.

## BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.

FIG. 1 is a diagram of an example network environment in which various solutions and schemes in accordance with the present disclosure may be implemented.

FIG. 2 is a block diagram of an example communication system in accordance with an implementation of the present disclosure.

FIG. 3 is a flowchart of an example process in accordance with an implementation of the present disclosure.

FIG. 4 is a flowchart of an example process in accordance with an implementation of the present disclosure.

FIG. 5 is a flowchart of an example process in accordance with an implementation of the present disclosure.

## DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### *Overview*

Implementations in accordance with the present disclosure relate to various techniques, methods, schemes and/or solutions pertaining to STA ID indication for constrained multi-link operation in wireless communications. According to the present disclosure, a number of possible solutions may be implemented separately or jointly. That is, although these possible solutions may be described below separately, two or more of these possible solutions may be implemented in one combination or another.

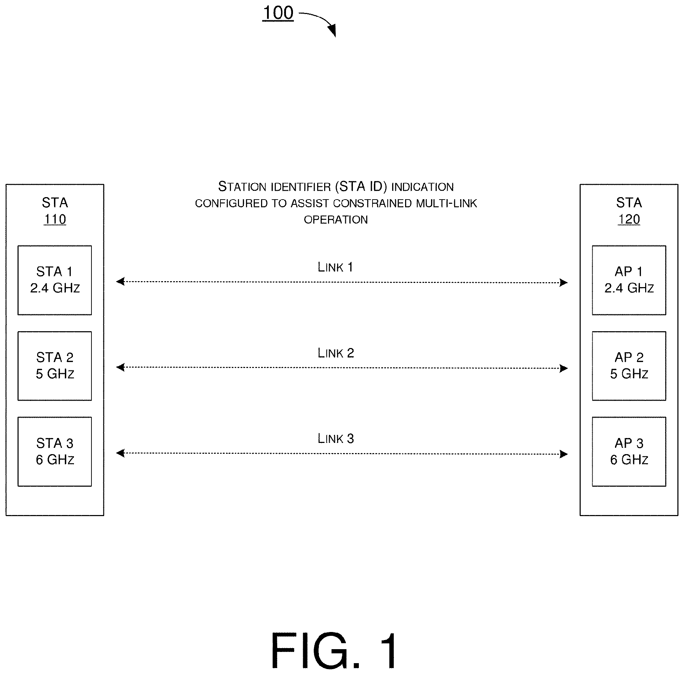

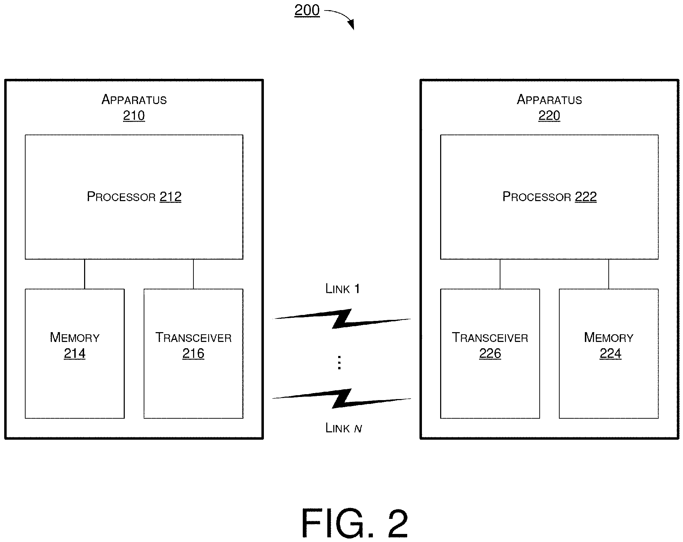

FIG. 1 illustrates an example network environment 100 in which various solutions and schemes in accordance with the present disclosure may be implemented. FIG. 2 ~ FIG. 5 illustrate examples of implementation of various proposed schemes in network environment 100 in accordance with the present disclosure. The following description of various proposed schemes is provided with reference to FIG. 1 ~ FIG. 5.

Referring to FIG. 1, network environment 100 may involve a STA 110 and a STA 120 communicating wirelessly over multiple links (e.g., link 1, link 2 and link 3) in accordance with one or more Institute of Electrical and Electronics Engineers (IEEE) 802.11 standards such as IEEE 802.11 be and beyond. Each of STA 110 and STA 120 may function as an MLD. For instance, STA 110 may function as a non-AP MLD with multiple virtual STAs (e.g., STA 1, STA 2 and STA 3) operating within STA 110. Correspondingly, STA 120 may function as an AP MLD with multiple virtual APs (e.g., AP 1, AP 2 and AP 3) operating within STA 120. Each of the multiple virtual STAs in the non-AP MLD implemented in STA 110 and each of the multiple virtual APs in the AP MLD implemented in STA 120 may transmit and receive over one or more of the multiple links under some constraints due to IDC interference. That is, STA 110 may function as a constrained non-AP MLD while STA 120 may function as a constrained AP MLD. Under various proposed schemes in accordance with the present disclosure, STA 110, STA 120 and STA 130 may be configured to perform STA ID indication for constrained multi-link operation in wireless communications according to various proposed schemes described herein.

In the context of EHT multi-link operation with constrained multi-link channel access, a constrained MLD, herein interchangeably referred to as a non-simultaneous TX/RX (non-STR) MLD, is an MLD with which IDC interference occurs when more than one STA within the MLD simultaneously transmits and receives frames on multiple links. Accordingly, a STA of a constrained MLD should not access a second link for transmission while the STA is receiving frame(s) on a first link, in case the STA has a constraint on simultaneous TX/RX operation on the first link and the second link. With respect to PPDU-level constrained multi-link channel access, when the STA has a constraint on simultaneous TX/RX operation on the first link and the second link, the STA determines that the second link is not available for a transmission while the STA is receiving on the first link an intra-basic service set (BSS) PPDU that meets one of a number of conditions or receiving on the first link a PPDU that cannot be determined as an intra-BSS PPDU or an inter-BSS PPDU.

A first condition of those conditions may be that the receiver vector (RXVECTOR) parameter BSS_COLOR of the PPDU carrying the frame is the BSS color of the BSS of which the STA is a member, or the BSS color of any tunneled direct link setup (TDLS) links to which the STA belongs in case the STA is a high-efficiency (HE) STA associated with a non-HE AP. A second condition may be that the PPDU is a very-high-throughput (VHT) PPDU with RXVECTOR parameter PARTIAL_AID equal to the BSS identifier (BSSID) [39.47] of the BSS with which the STA is associated or any of the other BSSs in the same multiple-BSSID set or co-hosted BSSID set to which its BSS belongs and the RXVECTOR parameter GROUP_ID equal to 0. A third condition may be that the PPDU is a VHT PPDU with RXVECTOR parameter PARTIAL_AID[5:8] equal to the four least-significant bits (LSBs) of the BSS color announced by the BSS of which the STA whose dot11PartialBSSColorImplemented is equal to true is a member, the RXVECTOR parameter GROUP_ID is equal to 63 and the Partial BSS Color field in the most recent HE operation element is 1. A fourth condition may be that the PPDU carries a frame that has a receiver address (RA), transmitter address (TA) or BSSID field value that is equal to the BSSID of the BSS or the BSSID of any BSS with which the STA is associated or any of the other BSSs in the same multiple-BSSID set or co-hosted BSSID set to which its BSS belongs, with the Individual/Group bit in the TA field value forced to the value 0 prior to the comparison. A fifth condition may be that the PPDU carries a Control frame that does not have a TA field or an RA field value that matches the saved TXOP holder address of the BSS or any BSS with which the STA is associated or any of the other BSSs in the same multiple-BSSID set or co-hosted BSSID set to which its BSS belongs.

Moreover, with respect to PPDP-level constrained multi-link channel access, when the STA has a constraint on simultaneous TX/RX operation on the first link and the second link, the STA determines that the second link is available for a transmission while the STA is receiving on the first link an inter-BSS PPDU that meets one of a number of conditions or while the STA is not receiving any PPDU. A first condition may be that the RXVECTOR parameter BSS_COLOR is not 0 and is not the BSS color of the BSS of which the STA is a member. A second condition may be that the PPDU is a VHT PPDU with RXVECTOR parameter PARTIAL_AID not equal to the BSSID[39:47] of the BSS with which the STA is associated or any of the other BSSs in the same multiple-BSSID set or co-hosted BSSID set to which its BSS belongs and the RXVECTOR parameter GROUP_ID is 0. A third condition may be that the PPDU is a VHT PPDU with RXVECTOR parameter PARTIAL_AID[5:8] not equal to the four LSBs of the BSS color announced by the BSS of which the STA whose dot11PartialBSSColorImplemented is equal to true is a member and RXVECTOPR parameter GROUP_ID equal to 63 when the Partial BSS Color field in the most recent HE operation element is 1. A fourth condition may be that the PPDU is either a VHT multiple-user (MU) PPDU or an HE MU PPDU with the RXVECTOR parameter UPLINK_FLAG equal to 0 and the STA is an AP. A fifth condition may be that the PPDU carries a frame that has a BSSID field with a value of which not being the BSSID of the BSS with which the STA is associated or any of the other BSSs in the same multiple-BSSID set or co-hosted BSSID set to which its BSS belongs or the wildcard BSSID. A sixth condition may be that the PPDU carries a frame that does not have a BSSID field but has both an RA field and a TA field, the value of neither of which is equal to the BSSID of the BSS with which the STA is associated or any of the other BSSs in the same multiple-BSSID set or co-hosted BSSID set to which its BSS belongs, with the Individual/Group bit in the TA field value forced to 0 prior to comparison.

It is noteworthy that, even though a STA is receiving on the first link an intra-BSS PPDU or a PPDU that cannot be determined as an intra-BSS PPDU or an inter-BSS PPDU, in case the STA is aware that the receiving PPDU is not addressed to that STA then the STA is not required to decode the remaining PPDU and, moreover, the STA can access the second link for a transmission. With respect to PPDU-level constrained multi-link channel access, when the STA has a constraint on simultaneous TX/RX on a first link and a second link, the STA determines that the second link is available for a transmission while the STA is receiving on the first link a PPDU that meets one of a number of conditions or while the STA is not receiving any PPDU. A first condition of such conditions may be that the STA is a non-AP STA and the PPDU is an HE MU PPDU where the RXVECTOR parameter UPLINK_FLAG is 0 and the RXVECTOR parameter STA_ID_LIST does not include the identifier of the STA or the broadcast identifier(s) intended for the STA. A second condition may be that the STA is a non-AP STA and the PPDU is an HE MU PPDU, HE single-user (SU) PPDU or HE extended-range (ER) SU PPDU with the RXVECTOR parameter UPLINK_FLAG being 1. A third condition may be that the STA is a non-AP STA and the PPDU is an HE trigger-based (TB) PPDU. A fourth condition may be that the STA is an AP STA and the PPDU is either an HE MU PPDU with the RXVECTOR parameter UPLINK_FLAG set to 0 or a VHT MU PPDU. A fifth condition may be that the STA is an AP STA and the PPDU is a VHT PPDU and the RXVECTOR parameter GROUP_ID is 0 and the RXVECTOR parameter PARTIAL_AID is not the BSSID[39:47] of the BSS with which the STA is associated. A sixth condition may be that the PPDU contains at least one medium access control (MAC) product data unit (MPDU) of which the RA is not the individual MAC address of the STA or the group address(es) of the STA. A seventh condition may be that the PPDU is an inter-BSS PPDU that meets one of the previously mentioned conditions. Depending on the implementation, in case the STA needs to update its network allocation vector (NAV) on the first link, this condition may be amended in that the PPDU is an inter-BSS PPDU that meets one of the conditions previously mentioned and the valid NAV information is obtained from the PPDU or the spatial reuse condition is met from the PPDU. Otherwise, in case that none of the conditions is met, the STA determines that the second link is not available for a transmission.

With respect to EHT multi-link operation with constrained multi-link packet scheduling, after obtaining a transmission opportunity (TXOP) on a second link, a STA may not transmit frame(s) on the second link to a peer STA in case the peer STA, which has a constraint on simultaneous TX/RX on a first link and the second link, is using the first link.

It is noteworthy that the STA that obtains a TXOP on the second link may consider that the peer STA, which has a constraint on simultaneous TX/RX on the first link and the second link, is using the first link, while the STA is receiving on the first link an intra-BSS PPDU that meets one of a number of conditions or a PPDU that cannot be determined as an intra-BSS PPDU or an inter-BSS PPDU. A first condition may be that the RXVECTOR parameter BSS_COLOR of the PPDU carrying the frame is the BSS color of the BSS of which the STA is a member, or the BSS color of any TDLS links to which the STA belongs in case the STA is an HE STA associated with a non-HE AP. A second condition may be that the PPDU is a VHT PPDU with RXVECTOR parameter PARTIAL_AID equal to the BSSID[39:47] of the BSS with which the STA is associated or any of the other BSSs in the same multiple BSSID set or co-hosted BSSID set to which its BSS belongs and the RXVECTOR parameter GROUP_ID equal to 0. A third condition may be that the PPDU is a VHT PPDU with RXVECTOR parameter PARTIAL_AID[5:8] equal to the four LSBs of the BSS color announced by of the BSS of which the STA whose dot11PartialBSSColorImplemented is equal to true is a member, the RXVECTOR parameter GROUP_ID is equal to 63 and the Partial BSS Color field in the most recent HE Operation element is 1. A fourth condition may be that the PPDU carries a frame that has an RA, TA or BSSID field value that is equal to the BSSID of the BSS or the BSSID of any BSS with which the STA is associated or any of the other BSSs in the same multiple BSSID set or co-hosted BSSID set to which its BSS belongs, with the Individual/Group bit in the TA field value forced to the value 0 prior to the comparison. A fifth condition may be that the PPDU carries a Control frame that does not have a TA field and that has an RA field value that matches the saved TXOP holder address of the BSS or any BSS with which the STA is associated or any of the other BSSs in the same multiple BSSID set or co-hosted BSSID set to which its BSS belongs. Otherwise, in case that none of the conditions is met, the STA may not transmit frame(s) on the second link to that peer STA.

It is also noteworthy that the STA that obtains a TXOP on a second link may not consider that the peer STA, which has a constraint on simultaneous TX/RX on the first link and the second link, is using the first link, while the STA is receiving on the first link an inter-BSS PPDU that meets one of a number of conditions or the STA is not receiving any PPDU. A first condition may be that the RXVECTOR parameter BSS_COLOR is not 0 and is not the BSS color of the BSS of which the STA is a member. A second condition may be that the PPDU is a VHT PPDU with RXVECTOR parameter PARTIAL_AID not equal to the BSSID[39:47] of the BSS with which the STA is associated or any of the other BSSs in the same multiple BSSID set or co-hosted BSSID set to which its BSS belongs and the RXVECTOR parameter GROUP_ID is 0. A third condition may be that the PPDU is a VHT PPDU with RXVECTOR parameter PARTIAL_AID[5:8] not equal to the four LSBs of the BSS color announced by the BSS of which the STA whose dot11PartialBSSColorImplemented is equal to true is a member and RXVECTOR parameter GROUP_ID equal to 63 when the Partial BSS Color field in the most recent HE Operation element is 1. A fourth condition may be that the PPDU is either a VHT MU PPDU or an HE MU PPDU with the RXVECTOR parameter UPLINK_FLAG equal to 0 and the STA is an AP. A fifth condition may be that the PPDU carries a frame that has a BSSID field, the value of which is not the BSSID of the BSS with which the STA is associated or any of the other BSSs in the same multiple BSSID set or cohosted BSSID set to which its BSS belongs or the wildcard BSSID. A sixth condition may be that the PPDU carries a frame that does not have a BSSID field but has both an RA field and TA field, neither value of which is equal to the BSSID of the BSS with which the STA is associated or any of the other BSSs in the same multiple BSSID set or co-hosted BSSID set to which its BSS belongs, with the Individual/Group bit in the TA field value forced to 0 prior to comparison. In such cases, the STA may transmit frame(s) on the second link to that peer STA.

It is further noteworthy that, even though the STA is receiving on the first link an intra-BSS PPDU or a PPDU that cannot be determined to be an intra-BSS PPDU or an inter-BSS PPDU, the STA can transmit frame(s) on the second link to a peer STA in case the STA is aware that the receiving PPDU is not originated from that peer STA. The STA that obtains a TXOP on a second link may consider that the peer STA, which has a constraint on simultaneous TX/RX on the first link and the second link, is using the first link, while the STA is receiving on the first link a PPDU that meets one of a number of conditions. A first condition may be that the peer STA is the AP to which the STA is associated and the PPDU is one of the following: (a) an HE TB PPDU, where the RXVECTOR parameter BSS_COLOR is the BSS color of the BSS with which the STA is associated, (b) an HE MU PPDU, HE SU PPDU or HE ER SU PPDU, where the RXVECTOR parameter BSS_COLOR is the BSS color of the BSS with which the STA is associated, the RXVECTOR parameter UPLINK_FLAG is 1, or (c) an VHT PPDU, where the RXVECTOR parameter PARTIAL_AID is the BSSID[39:47] of the BSS with which the STA is associated and the RXVECTOR parameter GROUP_ID is 0. A second condition may be that the peer STA is the non-AP STA of the BSS with which the STA is associated to and the PPDU is an HE MU PPDU, where the RXVECTOR parameter BSS_COLOR is the BSS color of the BSS with which the STA is associated, the RXVECTOR parameter STA_ID_LIST includes the identifier of the peer STA or the broadcast identifier(s) intended for the STA. A third condition may be that the PPDU contains at least one MPDU of which the RA or the TA is the individual MAC address of the peer STA or the group address(es) of the peer STA. In such cases, the STA may not transmit frame(s) on the second link to that peer STA.

In view of the above, it is believed that it may be helpful to provide STA ID related information to assist or otherwise improve constrained multi-link operations. For instance, in case STA ID information indicates a constrained STA, an AP may still transmit to other constrained STA(s). Accordingly, the various schemes proposed herein pertain to configuration of the STA ID field in an EHT SU PPDU and the related MLD behavior. Under various proposed schemes in accordance with the present disclosure regarding STA ID indication in the EHT SIG field in a preamble/frame, for an EHT PPDU sent from an AP in an AP MLD, the STA ID field may be configured depending on the situation. For instance, in case a receiver of the EHT PDU is a single STA, then the STA ID field may be set to a value corresponding to the AID associated with the receiver STA (e.g., a hash value of the AID or an encoded version of the AID). Otherwise (e.g., when the receiver of the EHT PPDU is a group of STAs), the STA ID field may be set to a predetermined value (e.g., 0). For an EHT PPDU sent to an AP in an AP MLD, the STA ID field may be configured in that the STA ID field may be set to the value corresponding to the AID associated with the STA in the transmitter STA.

Under the various proposed schemes in accordance with the present disclosure, when a STA in a constrained non-AP MLD is receiving an EHT PPDU that meets one of certain conditions, other STAs in the same constrained non-AP MLD may not transmit any PPDU or may pause EDCA channel access (if any). Such conditions may include, for example and without limitation: (1) the uplink (UL) and/or downlink (DL) field in the EHT PPDU PHY header indicates, or is equal to, a DL transmission and a value in the STA ID field in the EHT PPDU PHY header matches the value (e.g., hash value or encoded version of AID) associated with the AID associated with the receiver STA in the constrained non-AP MLD; and (2) the UL/DL field in the EHT PPDU PHY header indicates, or is equal to, a DL transmission and the STA ID field in the EHT PPDU PHY header is equal to a predetermined value (e.g., 0). However, after decoding the MAC header, when the STA in the constrained non-AP MLD determines that it is not a recipient of the EHT PPDU, other STAs in the same constrained non-AP MLD may initiate a PPDU transmission or resume the EDCA channel access.

Under the various proposed schemes in accordance with the present disclosure, when an AP in an AP MLD is receiving an EHT PPDU, other APs in the same AP MLD may not schedule any PPDU to certain STAs, including a STA that is in a constrained non-AP MLD and whose value corresponding to the AID matches a value in the STA ID field in the EHT PPDU PHY header. However, after decoding the MAC header, an address (e.g., MAC address) or an identifier (e.g., BSSID) associated with the STA in a constrained non-AP MLD that does not match either the RA or the TA in the MAC header in the received EHT PPDU may be scheduled by other APs in the same AP MLD.

Accordingly, the STA ID field in the EHT PPDU may be useful for addressing the IDC interference issue of a constrained MLD. Also, the STA ID field in the EHT PPDU may be helpful in reducing power consumption of a non-AP MLD. This is because, when multiple STAs of an MLD are activated, the power consumption of the MLD tends to be proportionally increased compared with a legacy single-link STA. Thus, reducing power consumption during the reception of an intra-BSS PPDU would be important.

Under a first proposed scheme in accordance with the present disclosure, the EHT SIG field in a preamble or frame may include a STA ID field to identify the STA, with the STA ID field configured in one of several ways in different scenarios. In a first scenario, when a STA in a constrained non-AP MLD sends an EHT PPDU to an AP in an AP MLD (with UL/DL field set to 1), the STA ID field may be set to a value (e.g., hash value or encoded version of AID) associated with the AID associated with the transmitting STA in the constrained non-AP MLD. In a second scenario, when either a single-link STA or a STA in a non-constrained non-AP MLD sends an EHT PPDU to an AP in an AP MLD (with UL/DL field set to 1), the STA ID field may be set to a first reserved value (e.g., 0). In a third scenario, when either a single-link STA or a STA in a non-constrained non-AP MLD sends an EHT PPDU to a peer STA (with UL/DL field set to 0), the STA ID field may be set to the value corresponding to the AID associated with the receiving peer STA. In the third scenario, the peer STA may be a STA in a constrained non-AP MLD, a single-link STA, or a STA in a non-constrained non-AP MLD. In a fourth scenario, when a STA in a constrained non-AP MLD sends an EHT PPDU to a peer STA (with UL/DL field set to 0), the STA ID field may be set to a first reserved value (e.g., 0). In the fourth scenario, the peer STA may be a STA in a constrained non-AP MLD, a single-link STA, or a STA in a non-constrained non-AP MLD. In a fifth scenario, when an AP in an AP MLD sends an EHT PPDU to one other STA (with UL/DL field set to 0), the STA ID field may be set to the value corresponding to the AID associated with the receiving STA. In the fifth scenario, the other STA may be a STA in a constrained non-AP MLD, a single-link STA, or a STA in a non-constrained non-AP MLD. In a sixth scenario, when an AP in an AP MLD sends an EHT PPDU that is addressed to more than one STAs (with UL/DL field set to 0), the STA ID field may be set to a first reserved value (e.g., 0).

Under the first proposed scheme with respect to EHT PPDU-level constrained multi-link channel access, when a STA in a constrained non-AP MLD is receiving an EHT PPDU that meets one of a number of conditions, other STAs in the same constrained non-AP MLD may not transmit any PPDU or may pause performing enhanced distributed channel access (EDCA). One of the conditions may be that the RXVECTOR parameter UPLINK_FLAG is equal to 0 (e.g., the UL/DL field in the PHY header is equal to 0) and the RXVECTOR parameter STA_ID of the EHT PPDU matches the value corresponding to the AID associated with the receiving STA in the constrained non-AP MLD. Another one of the conditions may be that the RXVECTOR parameter UPLINK_FLAG is equal to 0 (e.g., the UL/DL field in the PHY header is equal to 0) and the RXVECTOR parameter STA_ID of the EHT PPDU is equal to a first reserved value (e.g., 0). However, after decoding the MAC header, when the STA in the constrained non-AP MLD determines that it is not a recipient of the EHT PPDU, other STAs in the same constrained non-AP MLD may initiate a PPDU transmission or resume the EDCA channel access.

Under the first proposed scheme with respect to EHT PPDU-level constrained multi-link packet scheduling, while an AP in an AP MLD is receiving an EHT PPDU, other APs in the same AP MLD may not schedule any PPDU to certain STAs. For example, for a STA that is in the constrained non-AP MLD and whose value corresponding to the AID matches with the RXVECTOR parameter STA_ID of the EHT PPDU, other APs in the same AP MLD may not schedule any PPDU to such a STA when an AP in an AP MLD is receiving the EHT PPDU. As another example, for STAs in all constrained non-AP MLD in case the RXVECTOR parameter UPLINK_FLAG is equal to 0 (e.g., the UL/DL field in the PHY header is equal to 0) and the RXVECTOR parameter STA_ID of the EHT PPDU is equal to a first reserved value (e.g., 0), other APs in the same AP MLD may not schedule any PPDU to such STAs when an AP in an AP MLD is receiving the EHT PPDU. Under the proposed scheme, except when the MAC header is decoded, the STA in the constrained non-AP MLD that does not match either the RA or TA in the MAC header in the received EHT PPDU may be scheduled by other APs in the same AP MLD.

Under the first proposed scheme with respect to AID hash function for STA ID, the hash value of the AID may not include the first reserved value. Under the proposed scheme, the hash function may have the offset value as follows:

$$ \text{Hash (AID)} = \text{AID mod } 2^N + \text{Offset} $$

Here, N denotes the number of bits of the STA ID, and Offset denotes the number of the reserved values. For example, with N = 5 and the first reserved value = 0, Hash (AID) = AID mod $2^5$ + 1.

Under a second proposed scheme in accordance with the present disclosure, the EHT SIG field in a preamble or frame may include a STA ID field to identify the STA, with the STA ID field configured in one of several ways in different scenarios. In a first scenario, when a STA in a constrained non-AP MLD sends an EHT PPDU to an AP in an AP MLD (with UL/DL field set to 1), the STA ID field may be set to a value (e.g., hash value or encoded version of AID) associated with the AID associated with the transmitting STA in the constrained non-AP MLD. In a second scenario, when either a single-link STA or a STA in a non-constrained non-AP MLD sends an EHT PPDU to an AP in an AP MLD (with UL/DL field set to 1), the STA ID field may be set to a first reserved value (e.g., 0). In a third scenario, when either a single-link STA or a STA in a non-constrained non-AP MLD sends an EHT PPDU to a STA in a constrained non-AP MLD (with UL/DL field set to 0), the STA ID field may be set to the value corresponding to the AID associated with the receiving STA in the constrained non-AP MLD. In a fourth scenario, when either a single-link STA or a STA in a non-constrained non-AP MLD sends an EHT PPDU to a peer STA (with UL/DL field set to 0), the STA ID field may be set to either a first reserved value (e.g., 0) or the value corresponding to the AID associated with the receiving peer STA. In the fourth scenario, the peer STA may be a single-link STA or a STA in a non-constrained non-AP MLD. In a fifth scenario, when a STA in a constrained non-AP MLD sends an EHT PPDU to a peer STA (with UL/DL field set to 0), the STA ID field may be set to a second reserved value (e.g., 1). In the fifth scenario, the peer STA may be a STA in a constrained non-AP MLD, a single-link STA, or a STA in a non-constrained non-AP MLD. In a sixth scenario, when an AP in an AP MLD sends an EHT PPDU to a STA in a constrained non-AP MLD (with UL/DL field set to 0), the STA ID field may be set to the value corresponding to the AID associated with the receiving STA in the constrained non-AP MLD. In a seventh scenario, when an AP in an AP MLD sends an EHT PPDU to either a single-link STA or a STA in a non-constrained non-AP MLD (with UL/DL field set to 0), the STA ID field may be set to either a first reserved value (e.g., 0) or the value corresponding to the AID associated with the receiving STA. In an eighth scenario, when an AP in an AP MLD sends an EHT PPDU that is addressed to more than one STAs (with UL/DL field set to 0), the STA ID field may be set to a second reserved value (e.g., 1) or the STA ID field may be set to the second reserved value (e.g., 1) in case a STA in at least one constrained non-AP MLD is included as a recipient STA (otherwise, the STA ID field may be set to a first reserved value (e.g., 0)).

Under the second proposed scheme with respect to EHT PPDU-level constrained multi-link channel access, when a STA in a constrained non-AP MLD is receiving an EHT PPDU that meets one of a number of conditions, other STAs in the same constrained non-AP MLD may not transmit any PPDU or may pause EDCA channel access. One of the conditions may be that the RXVECTOR parameter UPLINK_FLAG is equal to 0 (e.g., the UL/DL field in the PHY header is equal to 0) and the RXVECTOR parameter STA_ID of the EHT PPDU matches the value corresponding to the AID associated with the receiving STA in the constrained non-AP MLD. Another one of the conditions may be that the RXVECTOR parameter UPLINK_FLAG is equal to 0 (e.g., the UL/DL field in the PHY header is equal to 0) and the RXVECTOR parameter STA_ID of the EHT PPDU is equal to a second reserved value (e.g., 1). However, after decoding the MAC header, when the STA in the constrained non-AP MLD determines that it is not a recipient of the EHT PPDU, other STAs in the same constrained non-AP MLD may initiate a PPDU transmission or resume the EDCA channel access.

Under the second proposed scheme with respect to EHT PPDU-level constrained multi-link packet scheduling, while an AP in an AP MLD is receiving an EHT PPDU, other APs in the same AP MLD may not schedule any PPDU to certain STAs. For example, for a STA that is in the constrained non-AP MLD and whose value corresponding to the AID matches with the RXVECTOR parameter STA_ID of the EHT PPDU, other APs in the same AP MLD may not schedule any PPDU to such a STA when an AP in an AP MLD is receiving the EHT PPDU. As another example, for STAs in all constrained non-AP MLD in case the RXVECTOR parameter UPLINK_FLAG is equal to 0 (e.g., the UL/DL field in the PHY header is equal to 0) and the RXVECTOR parameter STA_ID of the EHT PPDU is equal to a second reserved value (e.g., 1), other APs in the same AP MLD may not schedule any PPDU to such STAs when an AP in an AP MLD is receiving the EHT PPDU. Under the proposed scheme, except when the MAC header is decoded, the STA in the constrained non-AP MLD that does not match either the RA or TA in the MAC header in the received EHT PPDU may be scheduled by other APs in the same AP MLD.

Under the second proposed scheme with respect to AID hash function for STA ID, the hash value of the AID may not include the first reserved value or the second reserved value. Under the proposed scheme, the hash function may have the offset value as follows:

$$Hash\ (AID) = AID\ mod\ 2^N + Offset$$

Here, N denotes the number of bits of the STA ID, and Offset denotes the number of the reserved values. For example, with N = 5, the first reserved value = 0 and the second reserved value = 1, Hash (AID) = AID mod $2^5$ + 2.

In the first proposed scheme and the second proposed scheme, when a STA in a constrained non-AP MLD sends an EHT PPDU to a peer STA (with UL/DL field set to 0), the STA ID field may be set to a second reserved value (e.g., 1). It is noteworthy that the peer STA may be a STA in a constrained non-AP MLD, a single-link STA or a STA in a non-constrained non-AP MLD. Under a third proposed scheme in accordance with the present disclosure, this rule may be further expanded. For instance, when a STA in a constrained non-AP MLD sends an EHT PPDU to either a single-link STA or a STA in a non-constrained non-AP MLD (with UL/DL field set to 0), the STA ID field may be set to a value (e.g., hash value or encoded version of AID) associated with the AID associated with the transmitting STA in the constrained non-AP MLD. Moreover, when a STA in a constrained non-AP MLD sends an EHT PPDU to a peer STA in a constrained non-AP MLD (with UL/DL field set to 0), the STA ID field may be set to a first reserved value (e.g., 0).

***Illustrative Implementations***

FIG. 2 illustrates an example system 200 having at least an example apparatus 210 and an example apparatus 220 in accordance with an implementation of the present disclosure. Each of apparatus 210 and apparatus 220 may perform various functions to implement schemes, techniques, processes and methods described herein pertaining to STA ID indication for constrained multi-link operation in wireless communications, including the various schemes described above with respect to various proposed designs, concepts, schemes, systems and methods described above as well as processes described below. For instance, apparatus 210 may be an example implementation of STA 110, and apparatus 220 may be an example implementation of STA 120.

Each of apparatus 210 and apparatus 220 may be a part of an electronic apparatus, which may be a STA or an AP, such as a portable or mobile apparatus, a wearable apparatus, a wireless communication apparatus or a computing apparatus. For instance, each of apparatus 210 and apparatus 220 may be implemented in a smartphone, a smart watch, a personal digital assistant, a digital camera, or a computing equipment such as a tablet computer, a laptop computer or a notebook computer. Each of apparatus 210 and apparatus 220 may also be a part of a machine type apparatus, which may be an IoT apparatus such as an immobile or a stationary apparatus, a home apparatus, a wire communication apparatus or a computing apparatus. For instance, each of apparatus 210 and apparatus 220 may be implemented in a smart thermostat, a smart fridge, a smart door lock, a wireless speaker or a home control center. When implemented in or as a network apparatus, apparatus 210 and/or apparatus 220 may be implemented in a network node, such as an AP in a WLAN.

In some implementations, each of apparatus 210 and apparatus 220 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 210 and apparatus 220 may be implemented in or as a STA or an AP. Each of apparatus 210 and apparatus 220 may include at least some of those components shown in FIG. 2 such as a processor 212 and a processor 222, respectively, for example. Each of apparatus 210 and apparatus 220 may further include one or more other components not pertinent to the proposed scheme of the present disclosure (e.g., internal power supply, display device and/or user interface device), and, thus, such component(s) of apparatus 210 and apparatus 220 are neither shown in FIG. 2 nor described below in the interest of simplicity and brevity.

In one aspect, each of processor 212 and processor 222 may be implemented in the form of one or more single-core processors, one or more multi-core processors, one or more RISC processors or one or more CISC processors. That is, even though a singular term "a processor" is used herein to refer to processor 212 and processor 222, each of processor 212 and processor 222 may include multiple processors in some implementations and a single processor in other implementations in accordance with the present disclosure. In another aspect, each of processor 212 and processor 222 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 212 and processor 222 is a special-purpose machine specifically designed, arranged and configured to perform specific tasks including those pertaining to STA ID indication for constrained multi-link operation in wireless communications in accordance with various implementations of the present disclosure.

In some implementations, apparatus 210 may also include a transceiver 216 coupled to processor 212. Transceiver 216 may be capable of wirelessly transmitting and receiving data. In some implementations, apparatus 220 may also include a transceiver 226 coupled to processor 222. Transceiver 226 may include a transceiver capable of wirelessly transmitting and receiving data. Transceiver 216 of apparatus 210 and transceiver 226 of apparatus 220 may communicate each other over one or more of multiple links link 1 ~ link N, with N > 1, such as a first link and a second link.

In some implementations, apparatus 210 may further include a memory 214 coupled to processor 212 and capable of being accessed by processor 212 and storing data therein. In some implementations, apparatus 220 may further include a memory 224 coupled to processor 222 and capable of being accessed by processor 222 and storing data therein. Each of memory 214 and memory 224 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 214 and memory 224 may include a type of read-only memory (ROM) such as mask ROM, programmable ROM (PROM), erasable programmable ROM (EPROM) and/or electrically erasable programmable ROM (EEPROM). Alternatively, or additionally, each of memory 214 and memory 224 may include a type of non-volatile random-access memory (NVRAM) such as flash memory, solid-state memory, ferroelectric RAM (FeRAM), magnetoresistive RAM (MRAM) and/or phase-change memory.

Each of apparatus 210 and apparatus 220 may be a communication entity capable of communicating with each other using various proposed schemes in accordance with the present disclosure. For illustrative purposes and without limitation, a description of capabilities of apparatus 210, as STA 110 which may be a constrained non-AP MLD, and apparatus 220, as STA 120 which may be a constrained AP MLD, is provided below. It is noteworthy that, although the example implementations described below are provided in the context of WLAN, the same may be implemented in other types of networks.

Under a proposed scheme with respect to STA ID indication for constrained multi-link operation in wireless communications in accordance with the present disclosure, a first STA in a constrained non-AP MLD implemented in processor 212 of apparatus 210 may receive, via transceiver 216, a PPDU on a first link or a second link. Additionally, processor 212 may refrain one or more other STAs of a plurality of STAs in the non-AP MLD from performing an operation responsive to the PPDU meeting a condition.

In some implementations, the condition may include: (a) an UL/DL field in a PHY header of the PPDU indicating a DL transmission, and (b) a value in a STA ID field in the PHY header matching a value corresponding to an AID associated with the first STA in the non-AP MLD. The value corresponding to the AID may be a hash value of the AID or an encoded version of the AID.

In some implementations, the condition may include: (a) an UL/DL field in a PHY header of the PPDU indicating a DL transmission, and (b) a STA ID field in the PHY header being equal to a predetermined value.

In some implementations, in refraining the one or more other STAs in the non-AP MLD from performing the operation, processor 212 may refrain the one or more other STAs in the non-AP MLD from transmitting any PPDU.

In some implementations, in refraining the one or more other STAs in the non-AP MLD from performing the operation, processor 212 may cause the one or more other STAs in the non-AP MLD to pause performing EDCA.

In some implementations, the PPDU may include an EHT PPDU.

In some implementations, processor 212 may perform additional operations. For instance, processor 212 may decode a MAC header of the PPDU. Moreover, processor 212 may allow the one or more other STAs in the non-AP MLD to initiate or resume the operation responsive to determining that the first STA is not a receiver of the PPDU as a result of decoding the MAC header. In some implementations, in allowing the one or more other STAs in the non-AP MLD to initiate or resume the operation, processor 212 may initiate a PPDU transmission or resuming EDCA.

In some implementations, processor 212 may also receive, via transceiver 216, an EHT PPDU from an AP in an AP MLD. In such cases, a STA ID field in a PHY header of the EHT PPDU may be set to a predetermined value (e.g., 0).

In some implementations, processor 212 may also transmit, via transceiver 216, an EHT PPDU to an AP in an AP MLD. In such cases, a STA ID field in a PHY header of the EHT PPDU may be set to a value corresponding to an AID associated with one of the plurality of STAs in the non-AP MLD that transmits the EHT PPDU. The value corresponding to the AID may be a hash value of the AID or an encoded version of the AID.

Under a proposed scheme with respect to STA ID indication for constrained multi-link operation in wireless communications in accordance with the present disclosure, a first AP in a constrained AP MLD implemented in processor 222 of apparatus 220 may receive, via transceiver 226, a PPDU on a first link or a second link. Moreover, processor 222 may refrain one or more other APs of a plurality of APs in the AP MLD from scheduling any transmission to a STA responsive to the STA meeting a condition.

In some implementations, the condition may include: (a) the STA being a STA of a non-AP MLD which has a constraint on simultaneous TX/RX on the first link and the second link, and (b) a value corresponding to an AID associated with the STA matching a value in a STA ID field in the PHY header of the PPDU. The value corresponding to the AID may be a hash value of the AID or an encoded version of the AID.

In some implementations, the PPDU may include an EHT PPDU.

In some implementations, processor 222 may perform additional operations. For instance, processor 222 may decode a MAC header of the PPDU. Moreover, processor 222 may allow the one or more other APs in the AP MLD to schedule a transmission to the STA responsive to the STA meeting a different condition.

In some implementations, the different condition may include: (a) the STA being a STA of a non-AP MLD which has a constraint on simultaneous TX/RX on the first link and the second link, and (b) an address or an identifier associated with the STA not matching either a RA or a TA in the MAC header of the PPDU.

In some implementations, processor 222 may also receive, via transceiver 226, an EHT PPDU from a STA. In such cases, a STA ID field in a PHY header of the EHT PPDU may be set to a value corresponding to an AID associated with the STA. The value corresponding to the AID may be a hash value of the AID or an encoded version of the AID.

In some implementations, processor 222 may perform additional operations. For instance, processor 222 may set a STA ID field in a PHY header of an EHT PPDU for a receiver STA. Moreover, processor 222 may transmit, via transceiver 226, the EHT PPDU to the receiver STA.

In some implementations, in setting the STA ID field in the PHY header of the EHT PPDU, processor 222 may either: (i) set the STA ID field to a value corresponding to an AID associated with the receiver STA responsive to the receiver STA being a single STA; or (ii) set the STA ID field to a predetermined value responsive to the receiver STA being one of a plurality of STAs of an MLD. The value corresponding to the AID may be a hash value of the AID or an encoded version of the AID.

Under a proposed scheme with respect to STA ID indication for constrained multi-link operation in wireless communications in accordance with the present disclosure, a first AP in a constrained AP MLD implemented in processor 222 of apparatus 220 may set a STA ID field in a PHY header of a first EHT PPDU for a receiver STA by: (i) setting the STA ID field to a value corresponding to an AID associated with the receiver STA responsive to the receiver STA being a single STA; or (ii) setting the STA ID field to a predetermined value responsive to the receiver STA being one of a plurality of STAs of an MLD. Furthermore, processor 222 may transmit, via transceiver 226, the first EHT PPDU to the receiver STA. The value corresponding to the AID may be a hash value of the AID or an encoded version of the AID.

In some implementations, processor 222 may also receive, via transceiver 226, a second EHT PPDU from a transmitter STA with a STA ID field in a PHY header of the second EHT PPDU set to a value corresponding to an AID associated with the transmitter STA. The value corresponding to the AID may be a hash value of the AID or an encoded version of the AID.

*Illustrative Processes*

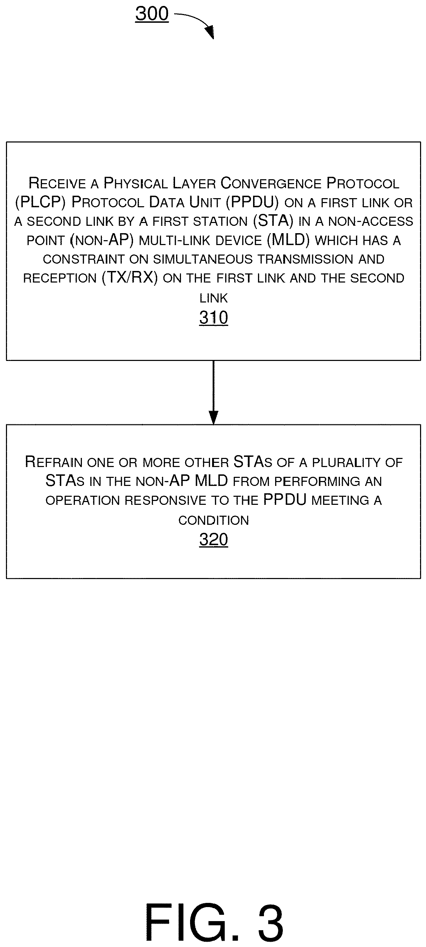

FIG. 3 illustrates an example process 300 in accordance with an implementation of the present disclosure. Process 300 may represent an aspect of implementing various proposed designs, concepts, schemes, systems and methods described above. More specifically, process 300 may represent an aspect of the proposed concepts and schemes pertaining to STA ID indication for constrained multi-link operation in wireless communications in accordance with the present disclosure. Process 300 may include one or more operations, actions, or functions as illustrated by one or more of blocks 310 and 320. Although illustrated as discrete blocks, various blocks of process 300 may be divided into additional blocks, combined into fewer blocks, or eliminated, depending on the desired implementation. Moreover, the blocks/sub-blocks of process 300 may be executed in the order shown in FIG. 3 or, alternatively in a different order. Furthermore, one or more of the blocks/sub-blocks of process 300 may be executed repeatedly or iteratively. Process 300 may be implemented by or in apparatus 210 and apparatus 220 as well as any variations thereof. Solely for illustrative purposes and without limiting the scope, process 300 is described below in the context of apparatus 210 as STA 110 (e.g., a STA or AP) and apparatus 220 as STA 120 (e.g., a peer STA or AP) of a wireless network such as a WLAN in accordance with one or more of IEEE 802.11 standards. Process 300 may begin at block 310.

At 310, process 300 may involve a first STA in a non-AP MLD, which has a constraint on simultaneous TX/RX on a first link and a second link and implemented in processor 212 of apparatus 210, receiving, via transceiver 216, a PPDU on the first link or the second link. Process 300 may proceed from 310 to 320.

At 320, process 300 may involve one or more other STAs of a plurality of STAs in the non-AP MLD refraining from performing an operation responsive to the PPDU meeting a condition.

In some implementations, the condition may include: (a) an UL/DL field in a PHY header of the PPDU indicating a DL transmission, and (b) a value in a STA ID field in the PHY header matching a value corresponding to an AID associated with the first STA in the non-AP MLD. The value corresponding to the AID may be a hash value of the AID or an encoded version of the AID.

In some implementations, the condition may include: (a) an UL/DL field in a PHY header of the PPDU indicating a DL transmission, and (b) a STA ID field in the PHY header being equal to a predetermined value.

In some implementations, in refraining the one or more other STAs in the non-AP MLD from performing the operation, process 300 may involve processor 212 refraining the one or more other STAs in the non-AP MLD from transmitting any PPDU.

In some implementations, in refraining the one or more other STAs in the non-AP MLD from performing the operation, process 300 may involve processor 212 causing the one or more other STAs in the non-AP MLD to pause performing EDCA.

In some implementations, the PPDU may include an EHT PPDU.

In some implementations, process 300 may involve processor 212 performing additional operations. For instance, process 300 may involve processor 212 decoding a MAC header of the PPDU. Moreover, process 300 may involve processor 212 allowing the one or more other STAs in the non-AP MLD to initiate or resume the operation responsive to determining that the first STA is not a receiver of the PPDU as a result of decoding the MAC header. In some implementations, in allowing the one or more other STAs in the non-AP MLD to initiate or resume the operation, process 300 may involve processor 212 initiating a PPDU transmission or resuming EDCA.

In some implementations, process 300 may further involve processor 212 receiving, via transceiver 216, an EHT PPDU from an AP in an AP MLD. In such cases, a STA ID field in a PHY header of the EHT PPDU may be set to a predetermined value (e.g., 0).

In some implementations, process 300 may further involve processor 212 transmitting, via transceiver 216, an EHT PPDU to an AP in an AP MLD. In such cases, a STA ID field in a PHY header of the EHT PPDU may be set to a value corresponding to an AID associated with one of the plurality of STAs in the non-AP MLD that transmits the EHT PPDU. The value corresponding to the AID may be a hash value of the AID or an encoded version of the AID.

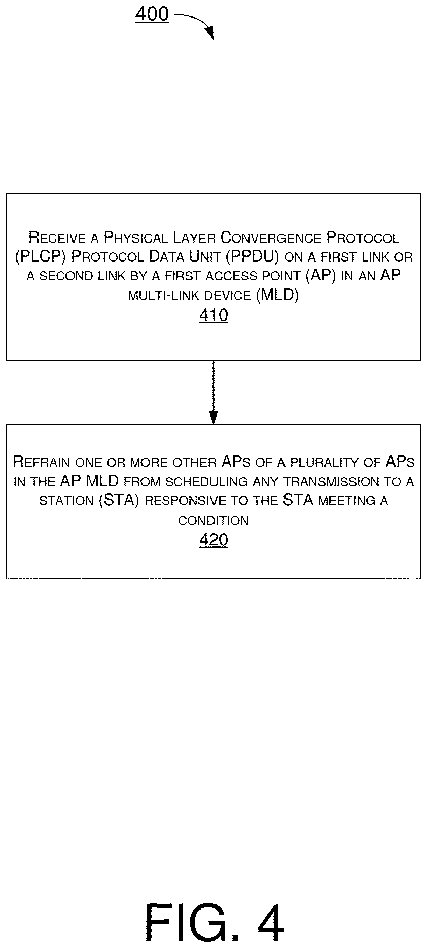

FIG. 4 illustrates an example process 400 in accordance with an implementation of the present disclosure. Process 400 may represent an aspect of implementing various proposed designs, concepts, schemes, systems and methods described above. More specifically, process 400 may represent an aspect of the proposed concepts and schemes pertaining to STA ID indication for constrained multi-link operation in wireless communications in accordance with the present disclosure. Process 400 may include one or more operations, actions, or functions as illustrated by one or more of blocks 410 and 420. Although illustrated as discrete blocks, various blocks of process 400 may be divided into additional blocks, combined into fewer blocks, or eliminated, depending on the desired implementation. Moreover, the blocks/sub-blocks of process 400 may be executed in the order shown in FIG. 4 or, alternatively in a different order. Furthermore, one or more of the blocks/sub-blocks of process 400 may be executed repeatedly or iteratively. Process 400 may be implemented by or in apparatus 210 and apparatus 220 as well as any variations thereof. Solely for illustrative purposes and without limiting the scope, process 400 is described below in the context of apparatus 210 as STA 110 (e.g., a STA or AP) and apparatus 220 as STA 120 (e.g., a peer STA or AP) of a wireless network such as a WLAN in accordance with one or more of IEEE 802.11 standards. Process 400 may begin at block 410.

At 410, process 400 may involve a first AP in an AP MLD, which is implemented in processor 222 of apparatus 220, receiving, via transceiver 226, a PPDU on a first link or a second link. Process 400 may proceed from 410 to 420.

At 420, process 400 may involve one or more other APs of a plurality of APs in the AP MLD refraining from scheduling any transmission to a STA responsive to the STA meeting a condition.

In some implementations, the condition may include: (a) the STA being a STA of a non-AP MLD which has a constraint on simultaneous TX/RX on the first link and the second link, and (b) a value corresponding to an AID associated with the STA matching a value in a STA ID field in the PHY header of the PPDU. The value corresponding to the AID may be a hash value of the AID or an encoded version of the AID.

In some implementations, the PPDU may include an EHT PPDU.

In some implementations, process 400 may involve processor 222 performing additional operations. For instance, process 400 may involve processor 222 decoding a MAC header of the PPDU. Moreover, process 400 may involve processor 222 allowing the one or more other APs in the AP MLD to schedule a transmission to the STA responsive to the STA meeting a different condition.

In some implementations, the different condition may include: (a) the STA being a STA of a non-AP MLD which has a constraint on simultaneous TX/RX on the first link and the second link, and (b) an address or an identifier associated with the STA not matching either a RA or a TA in the MAC header of the PPDU.

In some implementations, process 400 may further involve processor 222 receiving, via transceiver 226, an EHT PPDU from a STA. In such cases, a STA ID field in a PHY header of the EHT PPDU may be set to a value corresponding to an AID associated with the STA. The value corresponding to the AID may be a hash value of the AID or an encoded version of the AID.

In some implementations, process 400 may involve processor 222 performing additional operations. For instance, process 400 may involve processor 222 setting a STA ID field in a PHY header of an EHT PPDU for a receiver STA. Moreover, process 400 may involve processor 222 transmitting, via transceiver 226, the EHT PPDU to the receiver STA.

In some implementations, in setting the STA ID field in the PHY header of the EHT PPDU, process 400 may involve processor 222 either: (i) setting the STA ID field to a value corresponding to an AID associated with the receiver STA responsive to the receiver STA being a single STA; or (ii) setting the STA ID field to a predetermined value responsive to the receiver STA being one of a plurality of STAs of an MLD. The value corresponding to the AID may be a hash value of the AID or an encoded version of the AID.

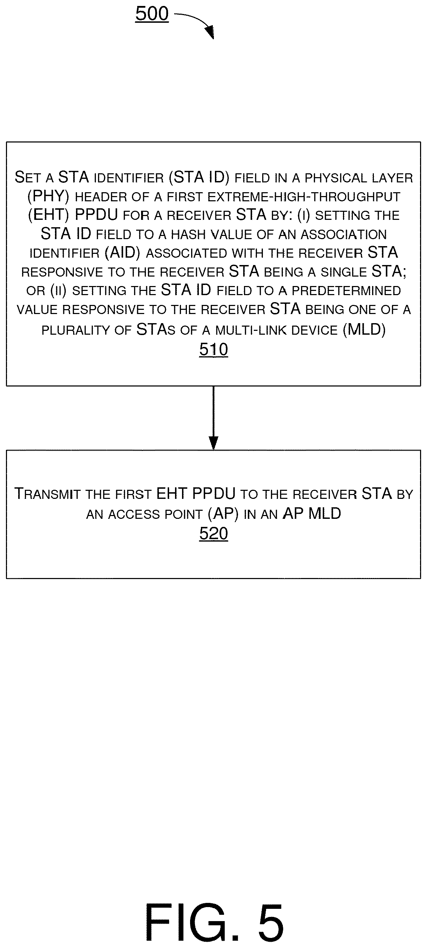

FIG. 5 illustrates an example process 500 in accordance with an implementation of the present disclosure. Process 500 may represent an aspect of implementing various proposed designs, concepts, schemes, systems and methods described above. More specifically, process 500 may represent an aspect of the proposed concepts and schemes pertaining to STA ID indication for constrained multi-link operation in wireless communications in accordance with the present disclosure. Process 500 may include one or more operations, actions, or functions as illustrated by one or more of blocks 510 and 520. Although illustrated as discrete blocks, various blocks of process 500 may be divided into additional blocks, combined into fewer blocks, or eliminated, depending on the desired implementation. Moreover, the blocks/sub-blocks of process 500 may be executed in the order shown in FIG. 5 or, alternatively in a different order. Furthermore, one or more of the blocks/sub-blocks of process 500 may be executed repeatedly or iteratively.

Process 500 may be implemented by or in apparatus 210 and apparatus 220 as well as any variations thereof. Solely for illustrative purposes and without limiting the scope, process 500 is described below in the context of apparatus 210 as STA 110 (e.g., a STA or AP) and apparatus 220 as STA 120 (e.g., a peer STA or AP) of a wireless network such as a WLAN in accordance with one or more of IEEE 802.11 standards. Process 500 may begin at block 510.

At 510, process 500 may involve an AP in an AP MLD, which is implemented in processor 222 of apparatus 220, setting a STA ID field in a PHY header of a first EHT PPDU for a receiver STA by: (i) setting the STA ID field to a value corresponding to an AID associated with the receiver STA responsive to the receiver STA being a single STA; or (ii) setting the STA ID field to a predetermined value responsive to the receiver STA being one of a plurality of STAs of an MLD. Process 500 may proceed from 510 to 520. The value corresponding to the AID may be a hash value of the AID or an encoded version of the AID.

At 520, process 500 may involve processor 222 transmitting, via transceiver 226, the first EHT PPDU to the receiver STA.

In some implementations, process 500 may further involve processor 222 receiving, via transceiver 226, a second EHT PPDU from a transmitter STA with a STA ID field in a PHY header of the second EHT PPDU set to a value corresponding to an AID associated with the transmitter STA. The value corresponding to the AID may be a hash value of the AID or an encoded version of the AID.

*Additional Notes*

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

**Claims**

1. A method, comprising:

   receiving a Physical Layer Convergence Protocol, in the following also referred to as PLCP, Protocol Data Unit, in the following also referred to as PPDU, on a first link or a second link by a first station, in the following also referred to as STA, in a non-access point, in the following also referred to as non-AP, multi-link device, in the following also referred to as MLD, which has a constraint on simultaneous transmission and reception, in the following also referred to as TX/RX, on the first link and the second link (310); and
   refraining one or more other STAs of a plurality of STAs in the non-AP MLD from performing an operation responsive to the PPDU meeting a condition (320).

2. The method of Claim 1, wherein the condition comprises:

   an uplink/downlink, in the following also referred to as UL/DL, field in a physical layer, in the following also referred to as PHY, header of the PPDU indicating a DL transmission, and
   a value in a STA identifier, in the following also referred to as STA ID, field in the PHY header matching a value corresponding to an association identifier, in the following also referred to as AID, associated with the first STA in the non-AP MLD.

3. The method of Claim 1 or 2, wherein the condition comprises:

   an UL/DL field in a PHY header of the PPDU indicating a DL transmission, and
   a STA ID field in the PHY header being equal to a predetermined value.

4. The method of any one of Claims 1 to 3, wherein the refraining the one or more other STAs in the non-AP MLD from performing the operation comprises either of:

> refraining the one or more other STAs in the non-AP MLD from transmitting any PPDU; or
> causing the one or more other STAs in the non-AP MLD to pause performing enhanced distributed channel access, in the following also referred to as EDCA.

5. The method of any one of Claims 1 to 4, further comprising:

> decoding a medium access control, in the following also referred to as MAC, header of the PPDU; and
> allowing the one or more other STAs in the non-AP MLD to initiate a PPDU transmission or resume EDCA responsive to determining that the first STA is not a receiver of the PPDU as a result of decoding the MAC header.

6. The method of any one of Claims 1 to 5, further comprising:

> receiving an extreme-high-throughput, in the following also referred to as EHT, PPDU from an AP in an AP MLD,
> wherein a STA ID field in a PHY header of the EHT PPDU is set to a predetermined value.

7. The method of any one of Claims 1 to 6, further comprising:

> transmitting an EHT PPDU to an AP in an AP MLD,
> wherein a STA ID field in a PHY header of the EHT PPDU is set to a value corresponding to an AID associated with one of the plurality of STAs in the non-AP MLD that transmits the EHT PPDU.

8. A method, comprising:

> receiving a Physical Layer Convergence Protocol, in the following also referred to as PLCP, Protocol Data Unit, in the following also referred to as PPDU, on a first link or a second link by a first access point, in the following also referred to as AP, in an AP multi-link device, in the following also referred to as MLD, (410); and
> refraining one or more other APs of a plurality of APs in the AP MLD from scheduling any transmission to a station, in the following also referred to as STA, responsive to the STA meeting a condition (420).

9. The method of Claim 8, wherein the condition comprises:

> the STA being a STA of a non-AP MLD which has a constraint on simultaneous transmission and reception, in the following also referred to as TX/RX, on the first link and the second link, and
> a value corresponding to an association identifier, in the following also referred to as AID, associated with the STA matching a value in a STA identifier, in the following also referred to as ID, field in the PHY header of the PPDU.

10. The method of Claim 8 or 9, further comprising:

> decoding a medium access control, in the following also referred to as MAC, header of the PPDU; and
> allowing the one or more other APs in the AP MLD to schedule a transmission to the STA responsive to the STA meeting a different condition.

11. The method of Claim 10, wherein the different condition comprises:

> the STA being a STA of a non-AP MLD which has a constraint on simultaneous TX/RX on the first link and the second link, and
> an address or an identifier associated with the STA not matching either a receiver address, in the following also referred to as RA, or a transmitter address, in the following also referred to as TA, in the MAC header of the PPDU.

12. The method of any one of Claims 8 to 11, further comprising:

> receiving an extreme-high-throughput, in the following also referred to as EHT, PPDU from a STA,
> wherein a STA ID field in a PHY header of the EHT PPDU is set to a value corresponding to an AID associated with the STA.

13. The method of any one of Claims 8 to 12, further comprising:

> setting a STA ID field in a PHY header of an EHT PPDU for a receiver STA by either:
>
> > setting the STA ID field to a value corresponding to an AID associated with the receiver STA responsive to the receiver STA being a single STA; or
> > setting the STA ID field to a predetermined value responsive to the receiver STA being one of a plurality of STAs of an MLD; and

transmitting the EHT PPDU to the receiver STA.

14. An apparatus (210), comprising:

a transceiver (216) configured to communicate wirelessly on at least a first link and a second link; and
a processor (212) coupled to the transceiver (216) and configured to perform operations as a non-access point, in the following also referred to as non-AP, multi-link device, in the following also referred to as MLD, which has a constraint on simultaneous transmission and reception, in the following also referred to as TX/RX, on the first link and the second link, the operations comprising the method steps as defined in any one of claims 1 to 7.

15. An apparatus (220), comprising:

a transceiver (226) configured to communicate wirelessly on at least a first link and a second link; and
a processor (222) coupled to the transceiver (226) and configured to perform operations as a access point, in the following also referred to as AP, multi-link device, in the following also referred to as MLD, the operations comprising the method steps as defined in any one of claims 8 to 13.

<u>100</u>

| STA <u>110</u> | STATION IDENTIFIER (STA ID) INDICATION CONFIGURED TO ASSIST CONSTRAINED MULTI-LINK OPERATION | STA <u>120</u> |

| STA 1 2.4 GHz | LINK 1 | AP 1 2.4 GHz |

| STA 2 5 GHz | LINK 2 | AP 2 5 GHz |

| STA 3 6 GHz | LINK 3 | AP 3 6 GHz |

# FIG. 1

$200$

APPARATUS
$210$

PROCESSOR $212$

MEMORY
$214$

TRANSCEIVER
$216$

LINK 1

⋮

LINK $N$

APPARATUS
$220$

PROCESSOR $222$

TRANSCEIVER
$226$

MEMORY
$224$

# FIG. 2

300

RECEIVE A PHYSICAL LAYER CONVERGENCE PROTOCOL (PLCP) PROTOCOL DATA UNIT (PPDU) ON A FIRST LINK OR A SECOND LINK BY A FIRST STATION (STA) IN A NON-ACCESS POINT (NON-AP) MULTI-LINK DEVICE (MLD) WHICH HAS A CONSTRAINT ON SIMULTANEOUS TRANSMISSION AND RECEPTION (TX/RX) ON THE FIRST LINK AND THE SECOND LINK
310

REFRAIN ONE OR MORE OTHER STAs OF A PLURALITY OF STAs IN THE NON-AP MLD FROM PERFORMING AN OPERATION RESPONSIVE TO THE PPDU MEETING A CONDITION
320

# FIG. 3

400 ⟍

RECEIVE A PHYSICAL LAYER CONVERGENCE PROTOCOL (PLCP) PROTOCOL DATA UNIT (PPDU) ON A FIRST LINK OR A SECOND LINK BY A FIRST ACCESS POINT (AP) IN AN AP MULTI-LINK DEVICE (MLD)
410

REFRAIN ONE OR MORE OTHER APS OF A PLURALITY OF APS IN THE AP MLD FROM SCHEDULING ANY TRANSMISSION TO A STATION (STA) RESPONSIVE TO THE STA MEETING A CONDITION
420

# FIG. 4

500 ⟍

SET A STA IDENTIFIER (STA ID) FIELD IN A PHYSICAL LAYER (PHY) HEADER OF A FIRST EXTREME-HIGH-THROUGHPUT (EHT) PPDU FOR A RECEIVER STA BY: (I) SETTING THE STA ID FIELD TO A HASH VALUE OF AN ASSOCIATION IDENTIFIER (AID) ASSOCIATED WITH THE RECEIVER STA RESPONSIVE TO THE RECEIVER STA BEING A SINGLE STA; OR (II) SETTING THE STA ID FIELD TO A PREDETERMINED VALUE RESPONSIVE TO THE RECEIVER STA BEING ONE OF A PLURALITY OF STAS OF A MULTI-LINK DEVICE (MLD)
510

TRANSMIT THE FIRST EHT PPDU TO THE RECEIVER STA BY AN ACCESS POINT (AP) IN AN AP MLD
520

# FIG. 5

Europäisches
Patentamt

European
Patent Office

Office européen
des brevets

# EUROPEAN SEARCH REPORT

Application Number

EP 21 17 2227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHARAN NARIBOLE (SAMSUNG): "Multi-Link Operation Channel Access Discussion", IEEE DRAFT; 11-19-1405-07-00BE-MULTI-LINK-OPERATION-CHANNEL-ACCESS-DISCUSSION, IEEE-SA MENTOR, PISCATAWAY, NJ USA , vol. 802.11 EHT; 802.11be, no. 7 14 November 2019 (2019-11-14), pages 1-18, XP068164763, Retrieved from the Internet: URL:https://mentor.ieee.org/802.11/dcn/19/11-19-1405-07-00be-multi-link-operation-channel-access-discussion.pptx [retrieved on 2019-11-14] | 1,4-6,8, 10,13-15 | INV. H04W76/15 ADD. H04W84/12 |
| Y | * page 3 * * page 5 - page 8 * * page 11 - page 12 * ----- | 2,3,7,9, 11-13 | |
| Y | ABHISHEK PATIL (QUALCOMM): "Multi-link Operation: Per-link AID", IEEE DRAFT; 11-19-1955-00-00BE-MULTI-LINK-OPERATION-PER-LINK-AID, IEEE-SA MENTOR, PISCATAWAY, NJ USA , vol. 802.11 EHT; 802.11be 13 January 2020 (2020-01-13), pages 1-12, XP068165149, Retrieved from the Internet: URL:https://mentor.ieee.org/802.11/dcn/19/11-19-1955-00-00be-multi-link-operation-per-link-aid.pptx [retrieved on 2020-01-13] * page 5 - page 6 * ----- | 2,3,7,9, 11-13 | |

TECHNICAL FIELDS
SEARCHED (IPC)

H04W

The present search report has been drawn up for all claims

| Place of search | Date of completion of the search | Examiner |
|---|---|---|
| The Hague | 11 October 2021 | Cortés Gómez, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63020585